Europäisches Patentamt

**European Patent Office**

**Office européen des brevets**

(11) Publication number: **0 031 855**
**A1**

# (12) EUROPEAN PATENT APPLICATION

(21) Application number: **79200806.2**

(22) Date of filing: **27.12.79**

(51) Int. Cl.³: **A 01 M 29/00**
**H 02 G 7/00, H 02 G 1/04**

(43) Date of publication of application:
**15.07.81** Bulletin **81/28**

(84) Designated Contracting States:
**AT BE CH DE FR GB IT LU SE**

(71) Applicant: **Heijnis, René**
**13 Wilhelminastraat**
**NL-1541 GM Koog aan de Zaan(NL)**

(72) Inventor: **Heijnis, René**
**13 Wilhelminastraat**
**NL-1541 GM Koog aan de Zaan(NL)**

(74) Representative: **Meijer, Cornelis Adrianus**
**Octrooibureau Ir. C.A. Meijer Herengracht 317 Postbus 3690**
**NL-1016 AV Amsterdam(NL)**

(54) Warning devices for birds, and method of fitting.

(57) The invention relates to warning devices for birds having the specific purpose of attaining a situation conducive to preventing them from flying into a given area. According to the invention, representations (41)-- for example in the form of silhouettes -- of predatory birds are selected for these warning devices, which silhouettes may be suspended, for example, between successive pylons (10,11) of overhead high-tension power transmission systems.

The invention furthermore relates to a method of fitting representations of predatory birds on or near a group of high-tension wires (12), to which end use is made of a helicopter (100) from which a reel (13) is suspended onto which a bearing cable (1) with the predatory bird silhouettes is wound. The helicopter flies from pylon to pylon while the bearing cable is being unwound from the reel. Cooperation with an operator (14) having taken up his position in the top of each pylon allows a bearing cable to be hung by its ends on two pylons from instance to instance.

./...

EP 0 031 855 A1

Fig.2

OCAM 251-1

René HEIJNIS, Koog aan de Zaan, NETHERLANDS

WARNING DEVICES FOR BIRDS, AND METHOD OF FITTING
=================================================

The invention relates to warning devices for birds, specifically for ensuring that they do not fly into a given area, constituted by objects provided in or near that area, which may be, for example, the area of the wires of overhead high-tension lines. Warning devices are known which are suspended equidistantly from a wire or cable which in each instance spans two pylons of such high-tension lines, the visual safeguards thus suspended frequently having the form of elongate cloths or strips or being provided in the form of discs or coils. These prior-art warning devices, however, only serve the purpose to a minor extent, presumably because, first of all, they fail to indicate that there is a much larger danger area to be avoided, and secondly, because they are not sufficiently conspicuous at a low intensity of light, such as at dawn or at dusk or on heavily overcast days.

The invention aims at providing improved warning devices, to which end, according to the invention, they are constituted by representations patterned after a predatory bird. On observing the representation of a predatory bird, especially in the pattern of a silhouette, safety instincts are activated in the bird which far exceed the effects that are released when noticing prior-art warning devices. Upon seeing a predatory bird, the bird responds immediately by flying to a much higher altitude, the reason being that a bird will never pass below a predatory bird, with the result that it avoids all of the danger area of the cables and wires of an overhead high-tension transmission system.

With the use of a silhouette pattern of a predatory bird, the bird's attention is drawn to the warning device even at low values of light intensity.

The great effectiveness of the warning devices according to the

-2-

invention makes it sufficient to provide one bearing cable which is equipped with them, which bearing cable can then hang in the middle of the group of high-voltage conductors. Instead of choosing a live wire, an efficient solution according to the invention consists in providing a separate, dead wire or cable for carrying the warning devices.

Accordingly, the invention furthermore relates to a method of fitting warning devices according to the invention, with the use of which an economically acceptable manner of fitting such a bearing cable with the predatory bird silhouettes is provided. This method according to the invention is characterized in that, for the purpose of fitting a number of visual warning devices to a high-tension transmission line, a bearing cable, provided with a number of regularly spaced representations of predatory birds, is wound on a reel, which reel is flown by a helicopter from pylon to pylon, the bearing cable having a length sufficient for spanning the distance between two successive pylons, which bearing cable has at its beginning a first auxiliary cable and at its end a second auxiliary cable, which first auxiliary cable can be grasped by an operator who has taken up a position in the top of the pylon when the helicopter overflies this pylon, whereupon the operator, by pulling this first auxiliary cable, causes the reel to decoil, so that the beginning of the bearing cable comes into the hands of the operator, who subsequently fastens the bearing cable by the beginning thereof to the pylon, whereupon the helicopter moves on to the next pylon, in the top of which another operator has taken up a position, in such a way that the helicopter, the reel of which has been fixed after a sufficient length of the second auxiliary cable has been unwound from the reel, conveys the bearing cable with the decoiled end to a point above the pylon, enabling the operator to fasten this end of the bearing cable to the pylon, whereupon the helicopter allows the second auxiliary cable to unwind entirely.

Both ends of the bearing cable are preferably provided, at the point of junction with the first and with the second auxiliary cable, with a loop or ring which makes it easy for the operator to fasten the bearing cable to the pylon by placing this loop or ring around a pin which is fixed on the pylon.

To explain the invention, an example of embodiment will be described, reference being made to the drawing.

Fig. 1 shows a length of bearing cable to which a number of silhouettes of predatory birds have been fastened.

Fig. 2 schematically illustrates the method of fitting a bearing cable with predatory bird silhouettes, use being made of a helicopter.

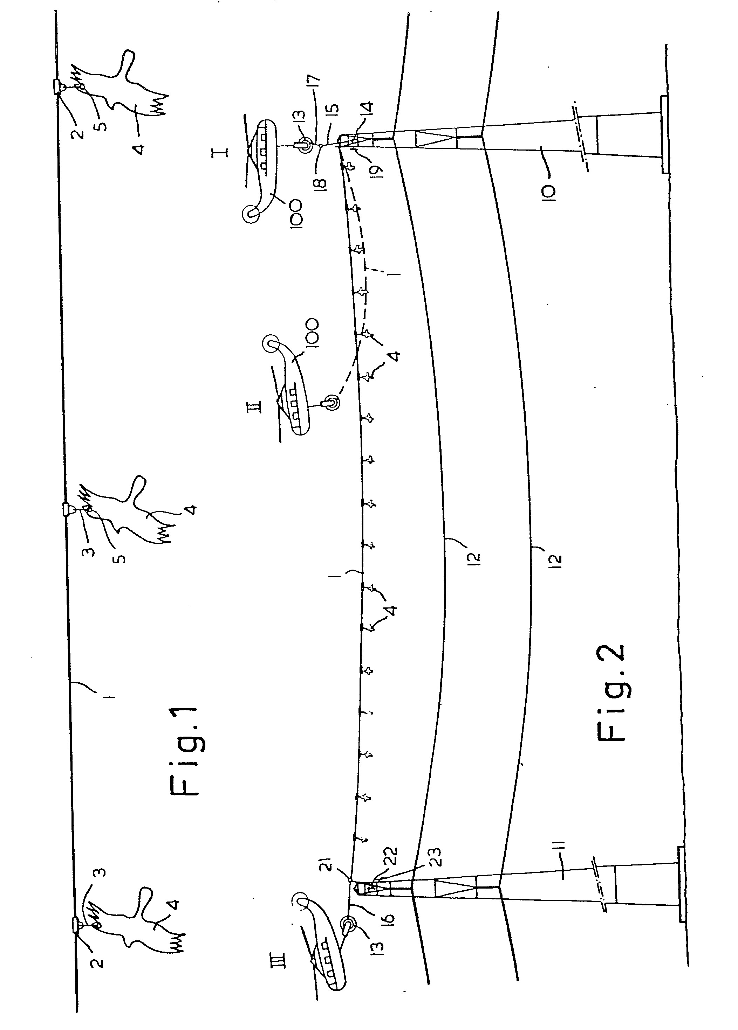

In Fig. 1, a bearing cable 1 is indicated. Suspended from a clamping sleeve 2, for example of the type with bolts and wing nuts (not shown), which is clamped about the bearing cable 1, is a closed hook 3, for example a snap hook. The predatory bird profile 4 is provided with a wearing ring 5 with which the snap hook 3 interlocks. The predatory bird profile can be made of a rigid plastic foil or of any other suitable material in the form of sheets. The external surface can be coated with a luminous or otherwise highly reflective paint. The span width of the predatory bird profile is suitably selected on the order of 1 metre, a useful profile-to-profile interval being 5 metres.

Fig. 2 schematically illustrates the method according to the invention for fitting the warning devices in an economically justified manner. A separate, dead bearing cable with predatory bird silhouettes is supplied with the use of a helicopter 100. Two pylons 10 and 11 of an overhead high-tension transmission system are shown, with the current-carrying wires 12 running between them. The bearing cable 1 to be fitted is originally wound on a reel 13, which is carried by the helicopter 100. The baering cable 1 is then already equipped with the predatory bird silhouettes, while a first auxiliary cable 15 and a second auxiliary cable 16 are fastened to the ends. An operator 14 has taken up his position in the top of the pylon 10. The helicopter 100 (see the right side of Fig. 2), in situation I overflies the top of the pylon 10, and in so doing brings the first auxiliary cable 15 into the vicinity of the operator 14. The operator catches this auxiliary cable 15 and unwinds the reel 13 until the end 17, where the bearing cable 1 begins, can be grasped. At this junction 17 between the auxiliary cable 15 and the bearing cable 1, a loop 18 is provided which is used by the operator 14 to be placed over a pin (not shown) which is fixed on the pylon 10. The first auxiliary cable 15 is coiled by hand and hung on the pylon 10, for example at the point 19.

The helicopter 100 then moves to situation II, and on to situation III in Fig. 2, gradually unwinding the bearing cable with the predatory bird silhouettes from the reel. In situation III, the second auxiliary cable 16 has likewise been unwound from the reel 13. The reel 13 is presently braked and fixed from the helicopter 100 in such a way as to allow the helicopter 100 to apply a tensile pull to the bearing cable 1. The application of this pull causes the bearing cable 1 to be tensioned and the loop 21 to be brought into the vicinity of the operator 22 in such a way as to enable him to grasp the loop 21 and to place it over a pin (not shown) which is fixed on the pylon 11. This completes the installation of the bearing cable 1. The second auxiliary cable 16 is unwound further and released from the reel, whereupon it is coiled by the operator 22 and hung up, for example at the point 23.

The auxiliary cables 15 and 16 can be used at a later time for lowering the bearing cable 1 with the predatory bird silhouettes to the ground for periodic cleaning of the silhouettes, the periodicity of which is estimated at five to eight years.

The invention is not restricted to the forms od embodiment described. It is also possible, for example, to fit the predatory

-5-

bird silhouettes on a current-carrying wire or on the earth-connected wire, or the predatory bird silhouette can be suspended at a point other than the wing edge; a variety of additional fields of application can be devised, such as providing predatory bird profiles along runways for airplanes and the like, without exceeding the scope of the invention.

-o-o-o-o-o-o-o-o-o-o-

-6-

# C L A I M S

1. Warning devices for ensuring that birds do not fly into a given area, constituted by objects provided in or near that area, characterized in that these objects are constituted by representations patterned after a predatory bird (4).

2. Warning devices according to claim 1, provided on a high-tension power transmission system, characterized in that the representations of predatory birds are suspended from a separate, dead cable (1).

3. Warning devices according to claim 1 or 2, characterized in that the representation of a predatory bird (4) is constituted by a predatory bird silhouette formed from a fabric, plate or any other material in sheet form.

4. Method of fitting warning devices according to any one of the preceding claims onto a overhead high-tension transmission line, for the purpose of preventing birds from flying against wires, characterized in that a bearing cable (1), provided with a number of regularly spaced representations of predatory birds (4), is wound on a reel (13), which reel is flown by a helicopter (100) from pylon to pylon (10,11), the bearing cable (1) having a length sufficient for spanning the distance between two successive pylons (10,11), which bearing cable (1) has at its beginning a first auxiliary cable (15) and at its end a second auxiliary cable (16), which first auxiliary cable (15) can be grasped by an operator (14) who has taken up a position in the top of the pylon (10) when the helicopter overflies this pylon (10), whereupon the operator (14), by pulling this first auxiliary cable (15), causes the reel (13) to decoil, so that the beginning of the bearing cable (1) comes into the hands of the operator (14), who subsequently fastens the bearing cable (1) by the beginning thereof to the pylon (10), whereupon the helicopter (100) moves on to the next pylon (11), in the top of which another operator (22) has taken up a position, in such a way that the helicopter (100), the reel (13) of which has been fixed after a sufficient length of the second auxiliary cable (16) has been unwound from the reel (13), conveys the bearing cable (1) with the decoiled end to a point above the pylon (11), in such a way as to enable the operator (22) to grasp this end and to fasten the bearing cable (1) to the pylon (11), whereupon the helicopter (100) allows the second auxiliary cable (16) to unwind entirely.

5. Method according to claim 4, characterized in that the bearing cable (1) is attached with the aid of a loop (18) provided at the ends thereof to a pin-shaped projection of the pylons.

6. Warning devices evidently intended for application of the invention according to any one of the preceding claims.

-o-o-o-o-o-o-o-o-

Fig.1

Fig.2

0031855

0031855
Application number
EP 79 20 0806

**EUROPEAN SEARCH REPORT**

European Patent Office

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | US - A - 3 487 569 (MENDALL)  <br> * Column 1, lines 31-33, 61-69; column 2, lines 44,45 * <br><br> -- | 1,2,6 | A 01 M 29/00 <br> H 02 G 7/00 <br> 1/04 |
| | FR - A - 1 411 862 (THOMAS) <br> * Left-hand column; figure 3 * <br><br> -- | 1,2,6 | |
| | GB - A - 334 338 (MURRAY-GOURLAY) <br> * Page 3, lines 5,6,26-28 * <br><br> -- | 1,3,6 | TECHNICAL FIELDS SEARCHED (Int.Cl. 3) |
| | US - A - 3 430 325 (LEMATTA) <br> * Column 1, lines 15-19, 48-67 * <br><br> -- | 2,4 | A 01 M 29/00 <br> H 02 G 7/00 <br> 1/04 |
| | US - A - 3 211 394 (GOODE) <br> * Column 1, lines 16-20; column 2, lines 14-18, 44-50; column 3, lines 20-24 * <br><br> -- | 4 | |
| | US - A - 3 586 256 (WELLMAN) <br> * Column 2, line 62 - column 3, line 7 * <br><br> ---- | 4 | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

The present search report has been drawn up for all claims

| Place of search | Date of completion of the search | Examiner |
|---|---|---|
| The Hague | 20-08-1980 | TIELEMANS |

EPO Form 1503.1   06.78